Europäisches Patentamt

European Patent Office

Office européen des brevets

(19)

(11) Veröffentlichungsnummer: **0 018 543**
**B1**

(12) **EUROPÄISCHE PATENTSCHRIFT**

(45) Veröffentlichungstag der Patentschrift: 07.08.85

(51) Int. Cl.⁴: **F 24 J 2/22, E 04 D 13/00**

(21) Anmeldenummer: **80102039.7**

(22) Anmeldetag: **16.04.80**

(54) **Absorberelement zur Aufnahme von Solarenergie.**

(30) Priorität: **17.04.79 AT 2864/79**
**17.04.79 AT 2861/79**

(43) Veröffentlichungstag der Anmeldung:
**12.11.80 Patentblatt 80/23**

(45) Bekanntmachung des Hinweises auf die
Patenterteilung:
**07.08.85 Patentblatt 85/32**

(84) Benannte Vertragsstaaten:
**DE FR GB IT SE**

(56) Entgegenhaltungen:
**EP-A-0 000 543**
**DE-A-2 359 196**
**DE-A-2 547 214**
**DE-A-2 632 373**
**DE-A-2 647 215**
**DE-A-2 724 314**
**DE-A-2 729 313**
**DE-U-7 613 567**
**FR-A-2 323 120**
**US-A-3 239 000**
**US-A-4 029 080**
**US-A-4 098 262**

(73) Patentinhaber: **Laing, Karsten**
**Hofener Weg 35-37**
**D-7148 Remseck 2- Aldingen (DE)**

(72) Erfinder: **Laing, Karsten**
**Hofener Weg 35-37**
**D-7148 Remseck 2- Aldingen (DE)**

(74) Vertreter: **Goddar, Heinz J., Dr. et al**
**FORRESTER & BOEHMERT Widenmayerstrasse 4/I**
**D-8000 München 22 (DE)**

Courier Press, Leamington Spa, England.

**Beschreibung**

Die Erfindung betrifft ein Absorberelement zur Aufnahme von Solarenergie, bei dessen Verwendung zur Erstellung der Dachhaut eines Daches das äußere Erscheinungsbild der Absorberfläche dem eines mit Ziegeln oder Schieferplatten gedeckten Daches gleicht, mit Ausformungen zum Anschluß an benachbarte Elemente in den Überlappungsbereichen und mit Anschlüssen zur Zu- und Abfuhr eines Wärmetransportmittels.

Absorberelemente zur Aufnahme von Solarenergie durch Aufheizen eines flüssigen Wärmetransportmittels sind seit langem bekannt. Bevorzugt werden sie in die nach Süden weisenden Flächen von Hausdächern eingesetzt.

Der breiten Verwendung derartiger Absorberelemente zur Aufnahme von Solarenergie steht jedoch entgegen, daß das Kosten-Nutzen-Verhältnis noch relativ ungünstig ist, da der Wirkungsgrad derartiger Absorberelemente oft nicht ausreichend ist. Auch spricht gegen die bekannten Absorberelemente, daß diese bei Einbringung in die Dachfläche als Fremdkörper wirken.

Aus der DE—A—2 729 313 ist ein Absorberelement bekannt, welches wie eine Dachpfanne gestaltet ist. Dabei ist jedoch lediglich auf der Rückseite eines derartigen Elementes ein S-förmig geführtes Rohr vorgesehen, welches das Wärmetransportmittel aufnimmt. Eine derartige Solardachpfanne ist zwar relativ billig herzustellen, die aufgenommene Energie ist jedoch nur sehr gering. Der in Form einer handelsüblichen Dachpfanne ausgestaltete Sonnenkollektor nach dem DE—U—7 613 567 hat durch den auf der Rückseite vorgesehenen Durchströmkasten einen größeren Wirkungsgrad, hier jedoch ist die der Sonne zugewandte Fläche des Absorberelementes transparent, so daß das sich ergebende Bild der Dachfläche durch die Absorberelemente gestört wird. Schließlich ist aus der EP—A—543 ein Bausatz für Klimadächer bekannt, der wie Dachziegel auf das Dach aufgesetzt werden soll. Dabei ist jedoch lediglich eine einfache Rohrleitung zur Abführung der aufgenommenen Wärmeenergie vorgesehen.

Die bekannten Absorberelemente zur Aufnahme von Solarenergie, die in der Größe eines oder einer Mehrzahl von Dachziegeln audgestaltet sind, sind entweder unzureichend im Wirkungsgrad, oder aber im äußeren Erscheinungsbild nicht akzeptabel.

Der Erfindung liegt die Aufgabe zugrunde, ein gattungsgemäßes Absorberelement zu schaffen, welches äußerlich wie ein mit Dachziegeln bzw. Schieferplatten bedecktes Dach wirkt und im Wirkungsgrad den bekannten großflächigen Sonnenkollektoren nicht nachsteht.

Erfindungsgemäß wird diese Aufgabe gelöst durch ein die Dachhaut und die Anschlußausformungen (5', 5") bildendes Blech, eine unterhalb der Dachhaut (5) angeordnete, mit einer Vielzahl von Kanälen für das Wärmetransportmittel versehene Extrusionsplatte aus hydrolysebeständigem Kunststoff und eine zwischen Dachhaut und Extrusionsplatte eingebrachte, eine Wärmeleitende Verbindung zwischen Dachhaut und Extrusionsplatte herstellende hochsiedende Flüssigkeit.

Die Unteransprüche kennzeichnen vorteilhafte Ausgestaltungen des erfindungsgemäßen Absorberelementes.

Weitere Merkmale und Vorteile der Erfindung ergeben sich aus den Ansprüchen und aus der nachfolgenden Beschreibung, in der eine Ausführungsbespiel anhand der Zeichnung im einzelnen erläutert ist. Dabei zeigt:

Fig. 1 einen Vertikalschnitt durch eine Dach mit den erfindungsgemäßen Absorberelementen,

Fig. 2a ein entsprechendes Absorberelement im Längsschnitt,

Fig. 2b den konstruktiven Aufbau der Extrusionsplatte,

Fig. 2c und 2d Schnittdarstellungen der Extrusionsplatte,

Fig. 3 eine Darstellung eines in ein Dach eingebrachten erfindungsgemäßen Absorberelementes,

Fig. 4a und 4b Ausbildungen der Markierungen,

Fig. 5a und 5b eine Draufsicht bzw. eine Schnittdarstellung einer anderen Ausführungsform des erfindungsgemäßen Absorberelementes,

Fig. 6 eine weiteres Ausführungsbeispiel,

Fig. 7a und 7b Anwendungsbeispiele, bei denen die Absorberelemente Schieferplatten bzw. Dachziegeln vortäuschen.

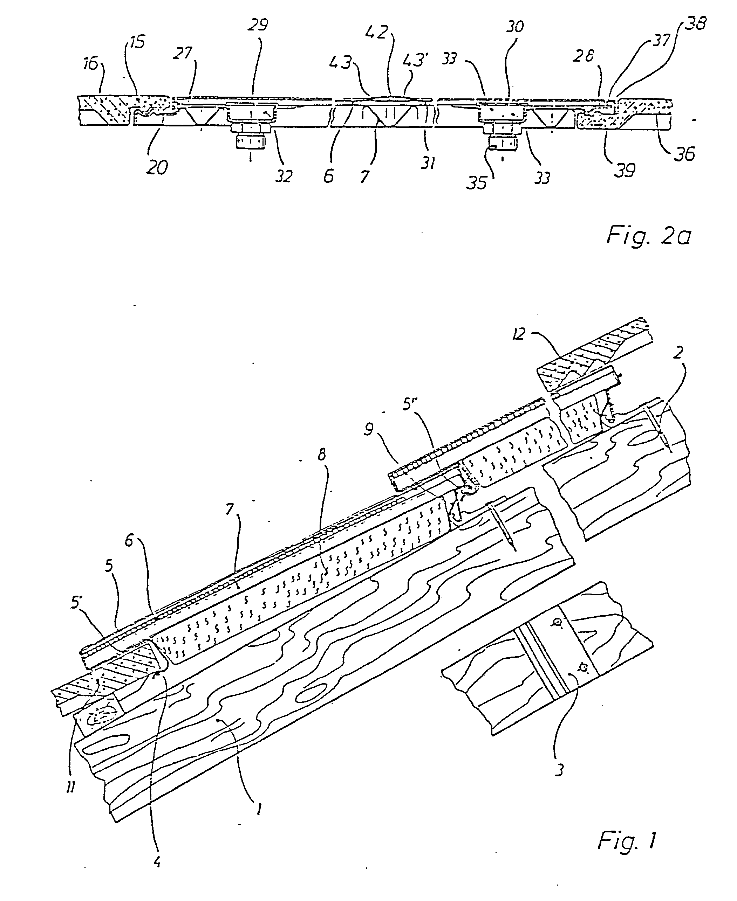

Fig. 1 zeigt einen Vertikalschnitt durch ein Dach mit erfingundsgemäßen Absorberelementen. Die Absorberelemente sind als langgestreckte prismatische Elemente ausgebildet, die in der Höhenstaffelung wie Dachziegel übereinandergreifen. Jedes Absorberelement ist an Sparren 1, beispielsweise durch Nägel 2 und Haken 3 befestigt. Die Absorberelemente bestehen aus zu Profilen 4 verformten Blechen, vorzugsweise aus Aluminium, welche in die Haken 3 eingehakt werden. Unterhalb der nach außen weisenden Dachhaut 5 ist eine Extrusionsplatte 6 aus hydrolysebeständigem Kunststoff angeordnet. Diese Platte wird durch eine Vielzahl von Federelementen 7 auf der gesamten Fläche an die nach außen weisende Dachhaut aus Metall gepreßt.

Zwischen der Dachhaut und der Extrusionsplatte ist eine thixotrope Flüssigkeit, die einen extrem hohen Siedepunkt aufweist, eingebracht, damit auch bei kleinen Ungenauigkeiten der einander berührenden Flächen keine Luftspalten bleiben. Diese Flüssigkeit sollte vorzugsweise leicht hygroskopisch sein, so daß sie bei hoher Temperatur verdampftes Wasser wieder aus der Umgebungsfeuchtigkeit substituiert. Eine Alternative besteht ferner darin, daß eine geringe Flüssigkeitsmenge, z.B. 0,3 l/m², zwischen zwei am Umfang miteinander verschweißten, sehr dünnen Folien eingeschlossen wird. Unterhalb der Federn 7 ist ein ebenfalls sich über die gesamte Länge erstreckendes Formteil 8 aus Isolierschaum angeordnet, welches durch ein eingelegtes, fünffach abgekantetes Blechprofil 9 am Herausfallen gehindert wird. Nach unten hin sind die übereinander gestaffelt angeordneten Absorberelemente durch Ziegel 11 begrenzt, und auch nach oben hin schließen Ziegel 12 an.

Fig. 2a zeigt das gleiche Absorberelement im Längsschnitt. An den Enden 27 und 28 sind die Extrusionsplatten 6 verschlossen. In der Nähe der Enden sind seitliche Durchbrüche 29 und 30 durch Perforieren der nach innen weisenden Gurtfläche 31 vorgesehen. Darunter sind Sammelkanäle 32 und 33 aufgeklebt oder aufgeschweißt. Der Sammenkanal 33 weist nicht nur einen Schraubnippel 35 zum Anschluß einer Schlauchleitung auf, sondern ist darüberhinaus als Überlappungsbereich 37 ausgebildet. Dieser entspricht dem rechtsseitigen Überlappungsbereich 15 des Dachziegels 16, so daß eine rechtsseitige Verbindung mit dem rechts daneben angeordneten Dachziegel 36 gewährleistet ist. Das dachhautbildende Blech ist gemäß 38 umgebogen, damit Regenwasser sicher abläuft. Am linksseitigen Ende jedes Absorberelementes ist ein untenliegender Überlappungsbereich 20 vorgesehen, der dem linken Überlappungsbereich 39 des Ziegels 36 entspricht. Somit ist auch zur linken Seite hin ein Übergang zum Ziegel 16, damit als nach allen Seiten, ermöglicht. Die Federelemente 7 sind im Querschnitt sichtbar.

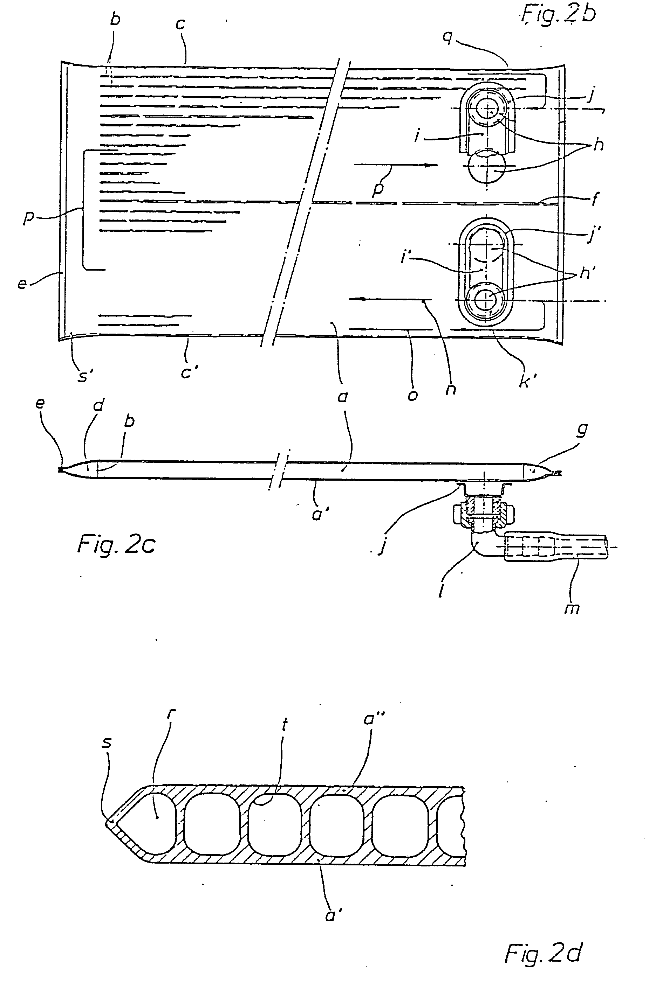

Fig. 2b und 2c zeigen eine erfindungsgemäße Extrusionsplatte. Diese besteht aus einem Doppelstegprofil a, bei dem an den Enden die Stege b mit Ausnahme der äußeren beiden Stege c und c' entfernt wurden, so daß ein Hohlraum d entsteht. Durch Verschweißen längs der Naht e wird die Stegplatte beidseitig verschlossen. An einem Ende bleibt der mittlere Steg f ebenfalls erhalten, oder aber es wird ein Element, welches den Kanal g in zwei Bereiche trennt, eingesetzt. Im unteren Gurt a' der Stegplatte sind Öffnungen h und h' angeordnet. Über diese Öffnungen sind die Formteile i und i' aufgesetzt, deren Flanschen j und j' mit dem Gurt a' unlösbar verbunden werden. In diesen Formteilen sind Gewindestutzen k' angeordnet, an die mittels Schlauchverschraubungen 1 die Zuleitungsschläuche m angeschlossen sind. Die Durchströmung der Kanäle erfolgt gemäß den Pfeilen n sowie o. Im Kanal d tritt gemäß Pfeil p der Wärmeträger in die zweite Hälfte der Kanäle ein und entweder direkt gemäß Pfeil p oder indirekt gemäß Pfeil q wieder aus.

Fig. 2d zeigt den konstruktiven Aufbau der eigentlichen Stegplatte und den Querschnitte der Kanäle. Die randnahen Kanäle r weisen eine Faltkante s auf, die eine einwandfreie Ausbildung der Quetschbereiche s' in Fig. 2b und 2c zuläßt. Die Stege münden über einen Krümmungsradius t in die Gurtflächen a' und a'' ein, wodurch Kerbspannungen vermieden werden.

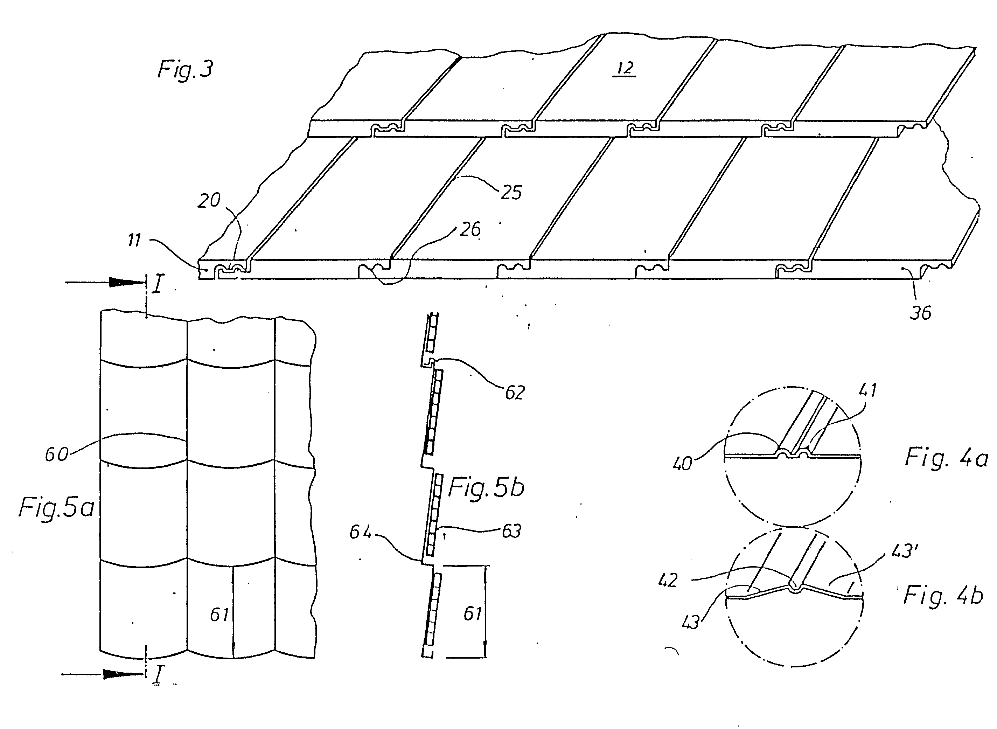

Fig. 3 zeigt den oberen und beidseitigen Abschluß des Absorberelementes. Links befindet sich der Dachziegel 11, rechts der Dachziegel 36, nach oben hin schließen die Ziegel 12 an. Die Absorberelemente weisen Markierungen 25 und 26 im Abstand von Ziegelbreite auf, so daß über die Länge des Absorberelementes eine Reihe von Zeigeln vorgetäuscht werden.

Fig. 4 zeigt die Ausbildung der Markierung 25 in Form zweier Wülste 40, 41.

Fig. 4b zeigt die Ausbildung der Markierung 25 in Form einer Rinne 42, die längs der Kuppe einer Erhebung mit den Seitenflächen 43 und 43' verläuft. Diese Erhebung ist erforderlich, damit die Auflage der Extrusionsplatte 6 von der Dachhaut 5 nicht behindert wird.

Fig. 5a zeigt eine andersartige Ausbildung des Daches, bei der die Absorberelemente Schieferbelegung vortäuschen, indem wiederum Markierungen 60, wie in Fig. 4 gezeigt, vorgesehen sind.

Fig. 5b zeigt dieses Dach längs der Schnittlinie I—I. Ein Absorberelement überdeckt mehrere Schieferlängen 61. Übereinander gestaffelte Absorberelemente greifen hakend gemäß 62 ineinander, so daß ein Regenabfluß sichergestellt ist. Die Extrusionsplatten 63 sind aus Aluminium extrudiert und mit dem Dachhautblech 64 verklebt.

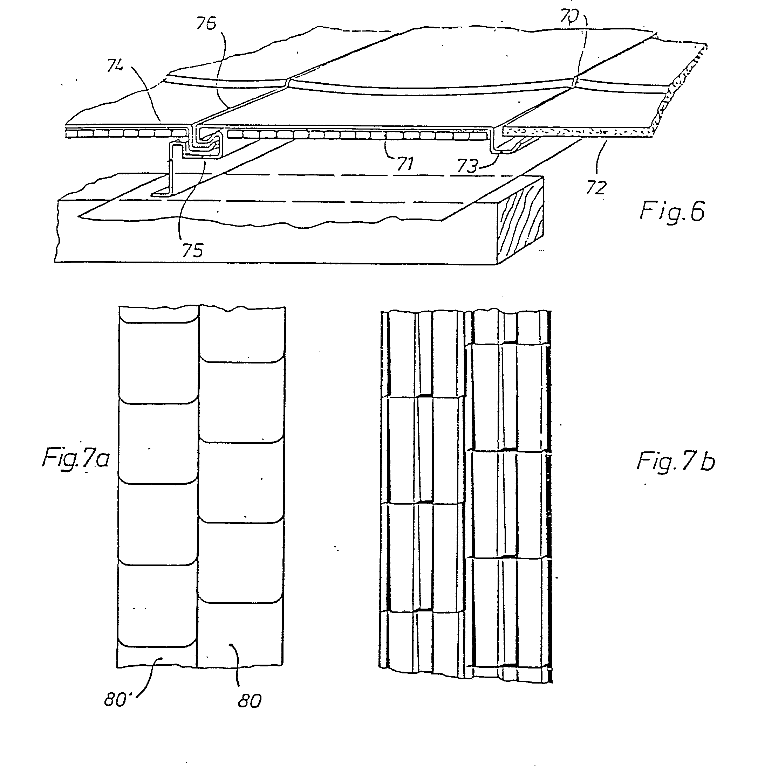

Fig. 6 zeigt eine Ausbildung nach der Erfindung, bei der die Absorberelemente in Richtung der Dachschräge verlaufen. Die Schieferplatten sind durch Ausprägung längs des Bereiches 70 vorgetäuscht. Die Extrusionsplatten 71 verlaufen bei dieser Ausführungsform über eine Höhenerstreckung, die vorzugsweise der gesamten Höhenerstreckung entspricht. Auch hier ist ein kontinuierlicher Übergang von den Absorberelementen auf die knoventionellen Schieferplatten 72 möglich, wobei bei rechtsseitigem Anschluß die Schieferplatte 72 auf der Kante 73 aufliegt, die ihrerseits durch eine nicht gezeigte Holzleiste unterstütz werden muß, während bei linksseitigem Anschluß die Schieferplatte auf dem Wulst 74 des dachhautbildenden Blechs aufliegt. Die linksseitige Begrenzung weist eine Rinne 75 auf, durch die Regenwasser, welches durch den Spalt 76 eindringt, ablaufen kann.

Fig. 7a zeigt verkleinert zwei nebeneinanderliegende Absorberelemente 80 und 80'.

Fig. 7b zeigt eine Ausführungsform, bei der das gleiche Konstruktionsprinzip mit einer Dachhaut ausgeführt ist, die Ziegel vortäuscht.

**Patentansprüche**

1. Absorberelement zur Aufnahme von Solarenergie, bei dessen Verwendung zur Erstellung der Dachhaut eines Daches das äußere Erscheinungsbild der Absorberfläche dem eines mit Ziegeln oder Schieferplatten gedeckten Daches gleicht, mit Ausformungen (5', 5'') zum Anschluß an benachbarte Elemente in den Überlappungsbereichen und mit Anschlüssen (35) zur Zu- und Abfuhr eines Wärmetransportmittels, gekennzeichnet durch ein die Dachhaut (5) und die Anschlußausformungen (5', 5'') bildendes Blech, eine unterhalb der Dachhaut (5) angeordnete, mit einer Vielzahl von Kanälen für das Wärmetransportmittel versehene Extrusionsplatte (6) aus hydrolyse-beständigem Kunststoff und eine zwischen Dachhaut (5) und Extrusionsplatte (6) eingebrachte, eine wärmeleitende Verbindung zwischen Dachhaut (5) und Extrusionsplatte (6) herstellende hochsiedende Flüssigkeit.

2. Absorberelement nach Anspruch 1, dadurch gekennzeichnet, daß die Extrusionsplatte (6) durch Federelemente (7) gegen die Dachhaut (5) gepreßt wird.

3. Absorberelement nach Anspruch 1 oder 2, dadurch gekennzeichnet, daß als Flüssigkeit eine thixotrope Flüssigkeit gewählt wird.

4. Absorberelement nach einem oder mehreren der vorangehenden Ansprüche, dadurch gekennzeichnet, daß die Flüssigkeit leicht hygroskopisch ist.

5. Absorberelement nach einem oder mehreren der vorangehenden Ansprüche, dadurch gekennzeichnet, daß die Flüssigkeit zwischen zwei sehr dünnen, miteinander verschweißten Folien eingeschlossen ist.

6. Absorberelement nach einem oder mehreren der vorangehenden Ansprüche, dadurch gekennzeichnet, daß unterhalb der Extrusionsplatte (6) ein Formteil (8) aus Isolierschaum angeordnet ist.

7. Absorberelement nach einem oder mehreren der vorangehenden Ansprüche, dadurch gekennzeichnet, daß die Extrusionsplatte (6) aus einem Doppelstegprofil (a) besteht, bei dem die Endabschnitte der Stege (b) entfernt sind, mit Ausnahme der Endabschnitte der äußeren Stege (c, c') und des einen Endabschnittes des mittleren Steges (f), wobei der Anschluß (35, h) zum Zuführen des Wärmetransportmittels auf der einen Seite des mittleren Steges (f) und der Anschluß zum Abführen des Wärmetransportmittels auf der anderen Seite des mittleren Steges (f) angeordnet ist.

8. Absorberelement nach einem oder mehreren der vorangehenden Ansprüche, dadurch gekennzeichnet, daß die Anschlüsse (35) mit Schlauchanschlußnippeln versehen sind.

9. Absorberelement nach einem oder mehreren der vorangehenden Ansprüche, dadurch gekennzeichnet, daß die quer zu den Stegen (b) verlaufenden Außenkanten der Extrusionsplatten (6) durch Zusammenpressen und anschließendes Verschweißen gebildet sind.

10. Absorberelement nach einem oder mehreren der vorangehenden Ansprüche, dadurch gekennzeichnet, daß zwischen den Stegen (b) und den Gurtflächen (a', a'') gerundete Übergänge (t) vorgesehen sind.

11. Absorberelement nach einem oder mehreren der vorangehenden Ansprüche, dadurch gekennzeichnet, daß eine der Gurtflächen (a' oder a'') Perforationen (h) aufweist, und daß diese Perforationen durch Sammelkanäle (i) mit Flanschen (j) verschlossen werden, wobei die Sammelkanäle Anschlußelemente (k) aufweisen.

12. Absorberelement nach einem oder mehreren der vorangehenden Ansprüche in der Größe einer Mehrzahl von Dachziegeln, gekennzeichnet durch den optischen Eindruck der Trennlinien zwischen benachbarten Dachziegeln wiedergegebenen Markierungen (25, 26, 40, 41, 42, 43, 77, 87, 88).

## Revendications

1. Elément absorbeur pour receuillir l'énergie solaire lors de son utilisation pour la réalisation d'un revêtement d'un toît dont l'apparence extérieure de la surface absorbeuse est celle même d'un toît recouvert de tuiles ou d'ardoises, muni de moyens (5', 5'') de raccordement aux éléments voisins dans les zones de recouvrement et de raccords (35) pour l'amenée et le départ d'un véhicule de chaleur, caractérisé par une tôle formant le revêtement de toît (5) et les moyens de raccordement (5', 5''), une plaque d'extrusion (6) en matière plastique résistant à l'hydrolyse, disposée sous le revêtement de toît (5) et munie d'une pluralité de canaux pour le véhicule de chaleur, et un liquide, à point d'ébullition élevée, introduit entre le revêtement (5) et la plaque d'extrusion (6) et réalisant entre ceux-ci une liaison conductrice de la chaleur.

2. Elément absorbeur selon la revendication 1, caractérisé par le fait que la plaque d'extrusion (6) est pressée contre le revêtement de toît (5) par des éléments élastiques (7).

3. Elément absorbeur selon la revendication 1 ou 2, caractérisé par le fait que l'on a choisi comme liquide un liquide thixotrope.

4. Elément absorbeur selon l'une des revendications précédentes, caractérisé par le fait que le liquide est légèrement hygroscopique.

5. Elément absorbeur selon l'une des revendications précédentes, caractérisé par le fait que le liquide est enfermé entre deux fentes très minces, soudées l'une à l'autre.

6. Elément absorbeur selon l'une des revendications précédentes, caractérisé par le fait que sous la plaque d'extrusion (6) est placée une pièce de forme (8) en matière alvéolaire isolante.

7. Elément absorbeur selon l'une des revendications précédentes, caractérisé par le fait que la plaque d'extrusion (6) est constituée d'un profilé d'âme double (a), où les sections d'extrémité d'âme (b) sont supprimées, à l'exception des sections d'extrémité des âmes extérieures (c, c') et de la section d'extrémité de l'âme médiane (f), le raccord (35, h) pour l'amenée du véhicule de chaleur étant situé d'un côté de l'âme médiane (f) et le raccord de départ du véhicule de chaleur étant situé de l'autre côté de l'âme médiane (f).

8. Elément absorbeur selon l'une des revendications précédentes, caractérisé par le fait que les raccords (35) sont munis de raccords à vis pour tuyaux.

9. Elément absorbeur selon l'une des revendications précédentes, caractérisé par le fait que les bords externes des plaques d'extrusion (6) s'étendant transversalement aux âmes (b) sont formés par serrage suivi d'un soudage.

10. Elément absorbeur selon l'une des revendications précédentes, caractérisé par le fait qu'entre les âmes (b) et les surfaces de membrure (a', a'') sont prévus des passages arrondis (t).

11. Elément absorbeur selon l'une des revendications précédentes, caractérisé par le fait qu'une des surfaces de membrure (a' ou a") comporte des trous (h) et ces trous sont fermés par des canaux collecteurs (i) munis de brides (j), les canaux collecteurs comportant des éléments de raccordement (k).

12. Elément absorbeur selon l'une ou plusieurs des revendications précédentes dans un ensemble d'une pluralité de tuiles de toît, caractérisé par des marquages (25, 26, 40, 41, 42, 43, 77, 87, 88) donnant l'impression optique de lignes séparatrices entre tuiles voisines.

## Claims

1. A solar energy collector absorber element which, when used for making a roof skin, gives the absorber surface the external appearance of a roof covered with tiles or slates, with recesses (5', 5") for connection to adjacent elements in the overlap zones and with connections (35) for the supply and discharge of a heat carrier, characterised by a metal sheet which forms the roof skin (5) and the connecting recesses (5', 5"), an extruded panel (6) made of hydrolysis-resistant plastics, disposed beneath the roof skin (5), and having a plurality of ducts for the heat carrier, and a high-boiling liquid introduced between the roof skin (5) and the extruded panel (6) to provide a thermally conductive connection between the roof skin (5) and the extruded panel (6).

2. An absorber element according to claim 1, characterised in that the extruded panel (6) is pressed against the roof skin (5) by spring elements (7).

3. An absorber element according to claim 1 or 2, characterised in that the liquid is a thixotropic liquid.

4. An absorber element according to one or more of the preceding claims, characterised in that the liquid is slightly hygroscopic.

5. An absorber element according to one or more of the preceding claims characterised in that the liquid is contained between two very thin films which are welded together.

6. An absorber element according to one or more of the preceding claims, characterised in that a moulding (8) of insulating foam is disposed beneath the extruded panel (6).

7. An absorber element according to one or more of the preceding claims, characterised in that the extruded panel (6) consists of a double web profile (a) from which the end parts of the webs (b) have been removed, except for the end parts of the outer webs (c, c') and of one end part of the middle web (f), the connection (35, h) for supplying the heat carrier being disposed on one side of the middle web (f) and the connection for discharging the heat carrier being disposed on the other side of the middle web (f).

8. An absorber element according to one or more of the preceding claims, characterised in that the connections (35) are provided with hose nipples.

9. An absorber element according to one or more of the preceding claims, characterised in that the outer edges of the extruded panels (6) extending transversely of the webs (b) are formed by being pressed together and then welded.

10. An absorber element according to any one or more of the preceding claims, characterised in that rounded transitions (t) are provided between the webs (b) and the flange surfaces (a', a").

11. An absorber element according to any one or more of the preceding claims, characterised in that one of the flange surfaces (a' or a") has perforations (h) and said perforations are sealed by collecting ducts (i) with flanges (j), the collecting ducts having connecting elements (k).

12. An absorber element according to any one or more of the preceding claims, of a size equal to a plurality of roof tiles, characterised by markings (25, 26, 40, 41, 42, 43, 77, 87, 88) which give the optical impression of the parting lines between adjacent roof tiles.

0 018 543

Fig. 2a

Fig. 1

1

Fig. 2b

Fig. 2c

Fig. 2d

*Fig.3*

12

20

11

25

26

36

*Fig.5a*

60

61

*I*

*I*

*Fig.5b*

62

64

63

61

*Fig. 4a*

41

40

*Fig. 4b*

42

43

43'

0 018 543

3

0 018 543

Fig.6

Fig.7a

Fig.7b